# EUROPEAN PATENT SPECIFICATION

(11) **EP 3 917 288 B1**
(45) Date of publication and mention of the grant of the patent: **28.02.2024**
(21) Application number: 20176403.2
(22) Date of filing: 26.05.2020
(51) Int. Cl.: H05B 47/19, H05B 47/12

(54) **LIGHTING CONTROL**
BELEUCHTUNGSSTEUERUNG
COMMANDE D'ÉCLAIRAGE

(43) Date of publication of application: 01.12.2021
(73) Proprietor: Helvar Oy Ab, 02150 Espoo (FI)
(72) Inventor: JUSLÉN, Henri, 02150 Espoo (FI); KORHONEN, Nikita, 02150 Espoo (FI); KALLAS, Juha, 02150 Espoo (FI)
(74) Representative: Berggren Oy

(56) References cited:
- EP-A1- 2 821 990
- WO-A1-2019/002327
- US-A1- 2015 102 745

## Description

### TECHNICAL FIELD

The example and non-limiting embodiments of the present invention relate to obtaining feedback from users concerning environmental characteristics in a space and adjusting at least one characteristic of light output of one or more luminaires of a lighting system applied for illuminating the space in accordance with the obtained feedback.

### BACKGROUND

In many modern lighting systems luminaires arranged for illuminating a space are arranged into a lighting network where the luminaires may be able to communicate with each other and/or with a lighting control entity such as a lighting system controller and/or a lighting control gateway that may link the luminaire(s) to a lighting system controller and/or a lighting control server. Such a lighting network may be based on wireless or wired communication between respective entities of the lighting network, e.g. on respective wireless links, on a wireless network or on a wired network or bus.

The lighting system may further comprise, for example, sensors arranged for observing environmental parameters such as occupancy status in the space and (ambient) light level in the space that are applicable for controlling operation of the lighting system accordingly. The sensors may be provided together with the luminaires and/or independently of the luminaires of the lighting network. In the former case, sensor data obtained from a sensor unit may be applied for lighting control locally in the respective luminaire, whereas in the latter case the sensor data may be first provided to the lighting control entity, which in turn makes use of the sensor data for lighting control that concerns of one or more luminaires of the lighting system.

The lighting system may comprise also sensors of other type for observing respective environmental characteristics in the space, such as carbon dioxide level, humidity, temperature, air pressure, sound pressure level, etc. As in case of the occupancy status and the light level, information obtained via usage of such sensors may be applied locally for lighting control at the luminaire provided together with the respective sensor unit and/or for transmission to the lighting control entity to be applied therein for lighting control that concerns one or more luminaires of the lighting system.

The sensor data pertaining to environmental characteristics within a space the lighting system serves to illuminate provides various possibilities for enhancing the lighting control within the lighting system and/or for making use of the lighting network therein to provide functions and/or services that facilitate enhancing environmental conditions in the space.

In related art, US 2015/102745 A1 discloses a lighting system, where sound levels are detected in the vicinity of at least one lighting unit to determine when there is a sound level above a threshold. The illumination provided by the lighting unit is adapted in such a way as to encourage a reduction of noise generation.

Further in related art, EP 2821990 A1 discloses a system comprising a sound attenuating panel, a control unit, and a sound sensor, wherein the sound sensor is configured to measure sound in a space wherein the sound attenuating panel is applied and is configured to provide a corresponding sound sensor signal, wherein the control unit is configured to control a controllable device as function of the sound sensor signal, wherein the controllable device is selected from the group consisting of a sound attenuating panel having controllable properties and another device having controllable properties.

### SUMMARY

It is an object of the present invention to provide a technique that facilitates enhancing environmental conditions in a space illuminated by a lighting system via application of sensor data captured in the space.

According to an example embodiment, a method in a lighting system comprising a plurality of luminaires arranged for illuminating a space and a plurality of sound sensors arranged for capturing sound in respective locations within said space is provided, the method comprising: receiving a respective time series of sound feature vectors from said plurality of sound sensors, wherein a sound feature vector comprises at least an indication of a sound level at the location of a respective sound sensor upon capturing the sound feature vector; receiving a respective time series of user input vectors from one or more of the plurality of luminaires, wherein a user input vector comprises at least a user rating concerning a noise level at the location of a respective luminaire upon recording the user input vector; deriving at least one sound level threshold via carrying out a sound analysis based at least on sound level indications received in the sound feature vectors and on user ratings concerning the noise level received in the user input vectors obtained within an analysis period of predefined duration that precedes the sound analysis; and adjusting at least one aspect of light output of at least one of the plurality of luminaires in response to one or more sound feature vectors received after derivation of the at least one sound level threshold indicating sound level that exceeds the at least one sound level threshold.

According to another example embodiment, alighting control entity for controlling one or more aspects of light output of a lighting system comprising a plurality of luminaires arranged for illuminating a space and a plurality of sound sensors arranged for capturing sound in respective locations within said space is provided, the lighting control entity configured to: receive a respective time series of sound feature vectors from said plurality of sound sensors, wherein a sound feature vector comprises at least an indication of a sound level at the location of a respective sound sensor upon capturing the sound feature vector; receive a respective time series of user input vectors from one or more of the plurality of luminaires, wherein a user input vector comprises at least a user rating concerning a noise level at the location of a respective luminaire upon recording the user input vector; derive at least one sound level threshold via carrying out a sound analysis based at least on sound level indications received in the sound feature vectors and on user ratings concerning the noise level received in the user input vectors obtained within an analysis period of predefined duration that precedes the sound analysis; and adjust at least one aspect of light output of at least one of the plurality of luminaires in response to one or more sound feature vectors received after derivation of the at least one sound level threshold indicating sound level that exceeds the at least one sound level threshold.

According to another example embodiment, a lighting system is provided, the lighting system comprising a plurality of luminaires arranged for illuminating a space, a plurality of sound sensors arranged for capturing sound in respective locations within said space and a lighting control entity according to the example embodiment described in the foregoing.

According to another example embodiment, a computer program is provided (not part of the claimed invention), the computer program comprising computer readable program code configured to cause performing at least the method according to the example embodiment described in the foregoing when said program code is executed on one or more computing apparatuses.

The computer program according to the above-described example embodiment may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the example embodiment described in the foregoing.

### BRIEF DESCRIPTION OF FIGURES

The embodiments of the invention are illustrated by way of example, and not by way of limitation, in the figures of the accompanying drawings, where
Figure 1A illustrates a block diagram of some logical components of a lighting system according to an example;
Figure 1B illustrates a block diagram of some logical components of a lighting system according to an example;
Figure 2 illustrates a block diagram of some components of a luminaire according to an example;
Figure 3 illustrates a block diagram of some components of a sound sensor according to an example;
Figure 4 illustrates an aspect of a user interface according to an example; and
Figure 5 illustrates a method according to an example.

### DESCRIPTION OF SOME EMBODIMENTS

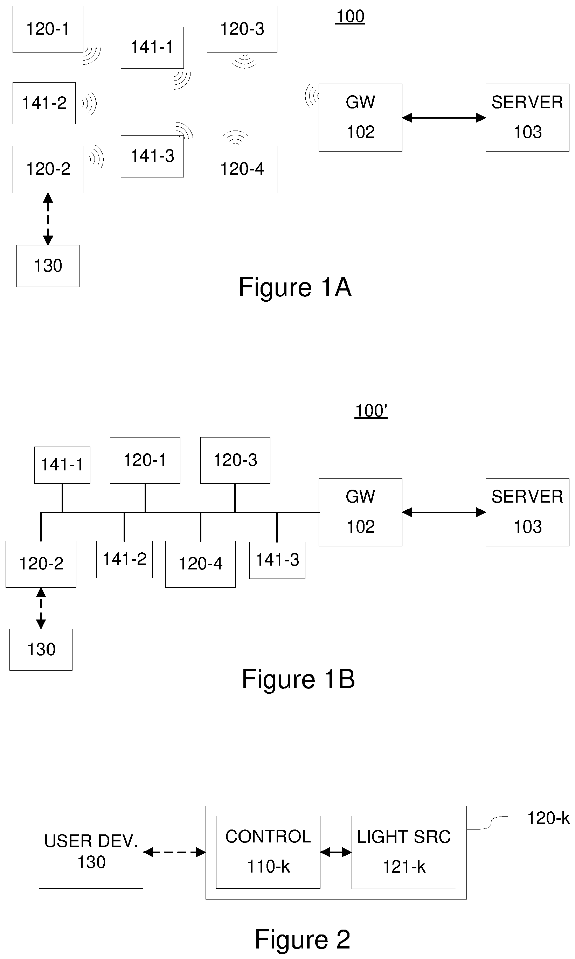

Figure 1A illustrates a block diagram of some logical components of a lighting system 100 according to an example, the lighting system 100 including luminaires 120-1, 120-2, 120-3, 120-4 for illuminating a respective portions of a space, sound sensors 141-1, 141-2, 141-3 for capturing information that represent sounds in respective locations of the space, a lighting control gateway 102 and a lighting control server 103. The luminaires 120-1 to 101-4 represent a plurality of (i.e. two or more) luminaires 120, where an individual luminaire may be referred to via a reference number 120-k, whereas the sound sensors 141-1 to 141-3 represent a plurality of (i.e. two or more) sound sensors 141, where an individual sound sensor may be referred to via a reference number 141-j. The luminaires 120-k are communicatively coupled to the lighting control gateway 102 and they may be communicatively coupled to each other and/or to the sound sensors 141-j. Along similar lines, the sound sensors 141-j are communicatively coupled to the lighting control gateway 102 and they may be communicatively coupled to each other and/or to the luminaires 120-k. The communicative coupling may be provided via a wireless communication medium, e.g. via a wireless communication network and/or via respective wireless links (as illustrated in the non-limiting example of Figure 1A).

The plurality of luminaires 120, the plurality of the sound sensors 141 and the lighting control gateway 102 may be considered as nodes of a lighting network associated with the lighting system 100. The lighting control gateway 102 is communicatively coupled to the lighting control server 103, e.g. via a communication network such as the Internet. The lighting network is hence coupled to the lighting control server 103 via the lighting control gateway 102.

The lighting control gateway 102 may be provided for processing sensor data received from the plurality of sound sensors 114 and for adjusting or controlling one or more aspects of operation of the lighting system 100 based on the received sensor data. The lighting control gateway 102 may further serve to couple the lighting network to the lighting control server 103, to provide at least part of the sensor data received from the plurality of sound sensors 141 to the lighting control server 103 for processing and/or analysis therein and/or to receive analysis results and/or lighting control information from the lighting control sever 103. The lighting control sever 102 may further operate to control one or more aspects of operation of the lighting system 100 based on user input and/or based on further sensor data received thereat.

The lighting system 100 may be arranged for illuminating a space or arranged for illuminating respective one or more spaces that are adjacent or otherwise close to each other. As a few non-limiting examples, a space illuminated by the lighting system 100 may comprise an indoor space intended to serve as workspace for one or more persons, such as an office room, an open office space, a meeting room, a classroom, etc.

Figure 1B illustrates a block diagram of some logical components of a lighting system 100' according to an example, which is a variation of the lighting system 100. Therein, the communicative coupling between elements of the lighting network, e.g. the luminaires 120-k, the sound sensors 141-j and the lighting control gateway 102, is provided via a wired communication medium, e.g. via a wired bus (as illustrated in the non-limiting example of Figure 1B).

While the respective illustrations of Figures 1A and 1B (at least implicitly) illustrate both the plurality of luminaires 120 and the plurality of sound sensors 141 as part of the same network, the lighting network may be provided using a single network or via usage of two separate and at least partially independent networks. As an example of the latter, the plurality of luminaires 120 may be communicatively coupled to the lighting control gateway 102 (and possibly also to each other) via a luminaire network and the plurality of sound sensors 141 may be communicatively coupled to the lighting control gateway 102 (and possibly to each other) via a sensor network, whereas the luminaire network and the sensor network jointly constitute the lighting network in the framework of the lighting system 100, 100'.

Figure 2 illustrates a block diagram of some logical components of a luminaire 120-k according to an example. The luminaire 120-k comprises a lighting control device 110-k and at least one light source 121-k. The lighting control device 110-k comprises a lighting control means for controlling the light output from the at least one light source 121-k and a communication means for wired or wireless communication with other devices, e.g. with other nodes of the lighting network. The lighting control device 110-k or the lighting control means therein may be provided by hardware means or by a combination of hardware means and software means, e.g. as an entity comprising a memory and a processor, where the memory comprises program code that is executable by the processor to provide at least some aspects of the lighting control means.

In an example, the luminaire 120-k may further comprise or be provided with a sensor unit comprising one or more sensors for observing respective environmental characteristics at the location of the space the luminaire 120-k serves to illuminate. The lighting control means in the lighting control device 110-k may be arranged to locally control light output of the luminaire 120-k based at least in part on sensor data obtained from the one or more sensors and/or to transmit sensor data obtained from the one or more sensors to the lighting control gateway 102 to facilitate centralized lighting control by a lighting control means therein. In another example, such sensor units may be provided in the lighting system 100, 100' separately from the luminaires 120-k and they may be arranged to transmit sensor data obtained from the one or more sensors to the lighting control gateway 102 to facilitate centralized lighting control by the lighting control means therein. Typical examples of such sensors include an occupancy sensor (e.g. a passive infrared (PIR) sensor) and a light sensor (e.g. a photodetector such as a photodiode), thereby enabling lighting control that provides for keeping the lights on only when occupancy in the space is detected and/or for keeping the space illuminated at a desired light level using lighting control techniques known in the art. Further examples of sensor types applicable in the sensor unit include respective sensors for observing environmental characteristics such as carbon dioxide level, humidity, ambient temperature, air pressure, etc.

In a non-limiting example, the at least one light source 121-k comprises one or more light emitting diodes (LEDs) and the lighting control device 110-k comprises or is provided as a LED driver device, whereas in another non-limiting example the at least one light source 121-k comprises one or more fluorescent lamps and the lighting control device 110-kcomprises or is provided as an electronic ballast.

The luminaire 120-k or an element thereof may have a device identifier (ID) assigned thereto, which may be also referred to as a luminaire ID. The luminaire ID may comprise e.g. an address, a serial number, a name, etc. assigned to the luminaire 120-k or to a component thereof. The luminaire ID of the luminaire 120-k may be stored, for example, in a memory provided in the luminaire 120-k and the luminaire ID assigned to the luminaire 120-k may be applied in communication with other nodes of the lighting network.

The examples of Figures 1A, 1B and 2 further illustrate a user device 130 communicatively coupled to one of the luminaires 120-k, which in the non-limiting examples of Figures 1A and 1B is the luminaire 120-2. While the illustrations show only a single user device, this is a choice made for graphical clarity of illustration and in general there may be a respective user device 130 coupled to one or more of the plurality of luminaires 120. The communicative coupling between the user device 130 and the luminaire 120-k may be provided via a respective wireless link. The user device 130 is not strictly a node of the lighting network within the lighting system 100, 100' but rather a device that may locally connect to one of the luminaires 120-k of the lighting network. The communicative coupling between the user device 130 and the luminaire 120-k may enable, for example, using a lighting adjustment application executed in the user device 130 to adjust one or more aspects of the light output of the luminaire 120-k and/or to provide user feedback concerning environmental characteristics in the space from the user device 130 to the luminaire 120-k and/or via the luminaire 120-k to the lighting control gateway 102. The latter aspect is described in more detail via examples provided in the following.

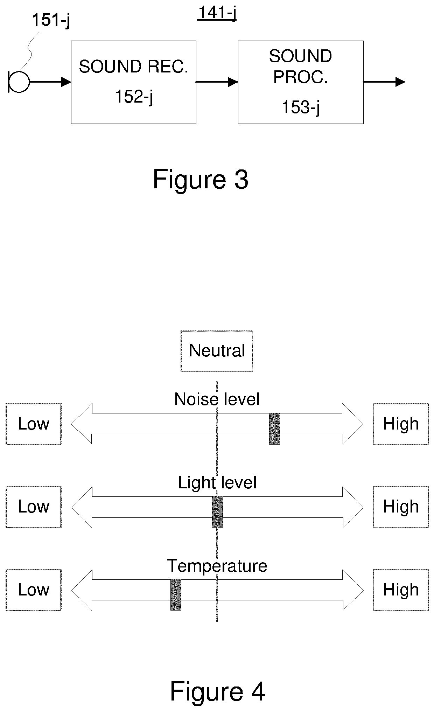

Figure 3 illustrates a block diagram of some logical components of a sound sensor 141-j according to an example. The sound sensor 141-j comprises one or more microphones 151-j for capturing sounds in the environment of the sound sensor 141-j, a sound recording portion 152-j for recoding a digital sound signal based on the sound captured by the one or more microphones 151-j and a sound processing portion 153-j for deriving one or more sound parameters based on the digital sound signal, which one or more sound parameters are descriptive of one or more characteristics of the sound captured by the one or more microphones 151-j. The one or more sound parameters may be referred to as or arranged into a sound feature vector. The sound sensor 141-j may further comprise a communication means for wired or wireless communication with the other nodes of the lighting network (not shown in the illustration of Figure 3) to enable transferring the sound feature vector to the lighting control gateway 102. The sound sensor 141-j hence serves to derive and provide the lighting control gateway 102 with information that is descriptive of sound characteristics at the location of the sound sensor 141-j, whereas the plurality of sound sensors 141 enable providing the lighting control server 102 with information that is descriptive of sound characteristics at a respective plurality of locations within the space the lighting system 100, 100' serves to illuminate.

Referring back to the sensor units described in the foregoing, according to an example the sound sensor 141-j may be provided as part of the sensor unit, either one that is included in (or otherwise provided together with) the luminaire 120-k or one that is provided independently of the luminaires 120-k. In another example, the sound sensor 141-j may be provided as an entity that is separate from the sensor units and/or from the luminaires 120-k. The sound sensor 141-j or an element thereof may have a device identifier (ID) assigned thereto, which may be also referred to as a sound sensor ID. The sound sensor ID may comprise e.g. an address, a serial number, a name, etc. assigned to the sound sensor 141-j or to a component thereof. The sound sensor ID of the sound sensor 141-j may be stored, for example, in a memory provided in the sound sensor 141-j and the sound sensor ID assigned to the sound sensor 141-j may be applied in communication with other nodes of the lighting network.

The illustration of Figure 3 is a conceptual one showing logical components of the sound sensor 141-j and hence a practical implementation thereof may combine some of the components depicted in Figure 3 and/or split some of the components depicted therein into two or more (sub)components. As an example in this regard, the sound recording portion 152-j may be provided by hardware means or by a combination of hardware means and software means with one or more MEMS microphones (where the acronym MEMS stands for microelectromechanical systems) integrated thereto, whereas the sound processing portion 153-j may be provided by a combination of hardware means and software means. Herein, implementation of a component of the sound sensor 141-j using a combination of hardware means and software means may involve, for example, the respective component comprising program code stored in a memory provided in the sound sensor 141-j that is executable by a processor provided in the sound sensor 141-j.

Preferably, the one or more microphones 151-j apply an omnidirectional polar pattern and, according to an example, the digital sound signal recorded by the sound recording portion 152-j may be provided as a sequence of 16-bit or 24-bit samples at 48 kHz sampling frequency and it may exhibit at least a total dynamic range of a 29 dB(A) to 110 dB(A) at a total harmonic distortion (THD) less than 1 % and represents at least a frequency range from 20 Hz to 16 kHz.

As described in the foregoing, the sound processing portion 153-j may be arranged to analyze the digital sound signal recorded at the sound recording portion 152-j to derive the one or more sound parameters and arrange the one or more sound parameters in the sound feature vector for transmission to the lighting control gateway 102. In this regard, the sound processing portion may be arranged to derive the sound feature vector at predefined time intervals e.g. via arranging the digital sound signal in a sequence of time frames and carrying out the sound analysis to derive a respective sound feature vector for each time frame. As an example in this regard, the analysis may be carried out on non-overlapping time frames of 64 samples using 48 kHz sampling frequency, thereby resulting in frame duration of approximately 1.33 milliseconds, whereas in other examples frame durations and/or sampling frequencies different from this example may be applied instead.

The one or more sound parameters derived based on a time frame of the recorded digital sound signal and included the sound feature vector pertaining to the time frame comprise a sound level indication derived based on the time frame under analysis, where the sound level indication hence serves to indicate the sound level at the location of the sound sensor 141-j at the time of capturing the sound serving as basis for the sound feature vector. As examples in this regard, the sound level indication may comprise a respective indication of one or more of the following sound levels or sound level types:
- A-weighted sound level in the time frame under analysis, where the A-weighting of the recorded digital sound signal may be carried out e.g. according to the European Standard EN 61672-1:2013;
- C-weighted sound level in the time frame under analysis, where the C-weighting of the recorded digital sound signal may be carried out e.g. according to the European Standard EN 61672-1:2013;
- Z-weighted sound level in the time frame under analysis, where the Z-weighting of the recorded digital sound signal may be carried out e.g. according to the European Standard EN 61672-1:2013.

The sound feature vector for the time frame may further comprise one or more additional sound parameters derived based on the time frame of the recorded digital sound signal, e.g. a pitch detected in the time frame under analysis (e.g. an indication of a presence or absence of pitch in said time frame and/or an indication of a pitch frequency or pitch period in said time frame) and/or a speech transmission index (STI) derived based on the time frame under analysis.

The sound sensor 141-j may be arranged to apply the communication means therein to transfer the sound feature vectors derived by the sound processing portion 153-j to the lighting control gateway 102 for processing of the one or more sound parameters included in the sound feature vectors therein and/or for transferring the one or more sound parameters included in the sound feature vectors further to the lighting control server 103.

To facilitate subsequent transmission of the sound feature vectors to the lighting control gateway 102, the sound sensor 141-j may be arranged to store a predefined number of the most recently derived sound feature vectors and/or to store the most recently derived sound feature vectors covering a predefined time period in a memory therein. The sound feature vectors may be stored together with respective timing information that indicates the capturing time of the sound that serves as basis for the respective sound feature vector, where the timing information may comprise, for example, a respective timestamp that indicates the time with respect to a predefined reference time.

The transfer of sound feature vectors from the sound sensor 141-j to the lighting control gateway 102 may apply one or both of the following approaches:
- The sound sensor 141-j may be arranged to apply the communication means to transmit a single sound feature vector to the lighting control gateway 102 in a respective sound indication message, where the sound indication message comprises a header part including information defined and/or required by the applied communication protocol and a payload part comprising one or more sound feature vectors together with the respective timing information (if available). The sound indication message further includes the sound sensor ID assigned to the sound sensor 141-j, wherein the sound sensor ID may be carried in the header part and/or in the payload part. As an example in this regard, the sound sensor 141-j may be arranged to transmit a sound indication message comprising a single sound feature vector as soon as it becomes available in the sound processing portion 153-j, to ensure providing a newly-derived sound feature vector(s) to the lighting control gateway without an unnecessary delay.
- As a variation of the above example, the sound sensor 141-j may be arranged to transmit a sound indication message comprising a single sound feature vector at predefined time intervals, e.g. the sound feature vector that is most recently derived by the sound processing portion 153-j. The applied time interval may depend on factors such as the duration of the time frame applied for derivation of the sound feature vectors, the amount of information included in a single sound feature vector and/or capacity of the transmission channel from the sound sensor 141-j to the lighting control gateway 102. The applied time interval may be, for example, in a range from a few tenths of a second to a few seconds, e.g. one second.
- The sound sensor 141-j may be configured to arrange a plurality of (consecutive) sound feature vectors into an aggregate sound feature vector (e.g. into a sound feature matrix) that comprises two or more (consecutive) sound feature vectors and transfer the aggregate sound feature vector to the lighting control gateway 102. The aggregate sound feature vector including (consecutive) sound vectors derived at the sound processing portion 153-j since transmission of the most recent previous aggregate sound vector may be transmitted, for example, at predefined time intervals or as soon as (consecutive) sound feature vectors not previously transmitted to the lighting control gateway 102 have been derived at the sound processing portion 153-j. As an example in this regard, the transmission interval of the aggregate feature vectors may be set to a suitable value in a range from a few tenths of a second to tens of seconds, e.g. to one second, depending on the desired delay, on the amount of information included in a single sound feature vector and/or capacity of the transmission channel from the sound sensor 141-j to the lighting control gateway 102. As examples concerning the manner of transferring the aggregate sound feature vector, the transfer may comprise the sound sensor 141-j transmitting the aggregate sound feature vector to the lighting control gateway 102 in a sound indication message (of a type described above), the sound sensor 141-j uploading the aggregate sound feature vector to the lighting control gateway 102 or lighting control gateway 102 downloading the aggregate sound feature vector from the sound sensor 141-j, where both uploading and downloading involve transfer of the sound feature vectors together with the respective timing information (if available) and the sound sensor ID assigned to the sound sensor 141-j.

The lighting control gateway 102 may comprise a lighting control means and a (first) communication means that enables communication with the respective communication means in the lighting control devices 110-k of the luminaires 120-k and in the sound sensor devices 141-j. Moreover, the lighting control gateway 102 may comprise second communication means that enables communication with the lighting control gateway 103. Alternatively or additionally, the (first) communication means in the lighting control gateway 102 may enable communication also with the lighting control server 103. The lighting control device 102 or the lighting control means therein may comprise a memory and a processor, where the memory comprises program code that is executable by the processor to implement at least some aspects of the control means. The lighting control gateway 102 is to be construed as a logical entity that may be provided as an entity (physically) separate from the plurality of luminaires 120 or it may be provided as part of one of the plurality of luminaires 120.

The lighting control means in the lighting control gateway 102 may be arranged to receive the respective sound feature vectors from the plurality of sound sensors 141 and to store the received sound feature vectors, together with the associated timing information (if included) and the sound sensor ID, in a memory in the lighting control gateway 102 for subsequent processing in the lighting control gateway 102 and/or for subsequent transmission to the lighting control server 103. The lighting control means in the lighting control gateway 102 may complement the received sound feature vectors with timing information (e.g. respective timestamps) that indicates the time of their reception at the lighting control gateway 102. The lighting control means in the lighting control gateway 102 may be further arranged to control one or more aspects of operation of the lighting system 100, 100' based at least in part on the sound parameters included in the sound feature vectors received from the plurality of sound sensors 141-j. This aspect is described in further detail via examples provided in the following.

As described in the foregoing, the lighting control devices 110-k, the sound sensors 141-j and the lighting control gateway 102 each comprises the respective communication means to enable wired or wireless communication with other nodes of the lighting network. In case wireless communication is applied in this regard, the communication means may comprise a wireless transceiver that is capable of communicating with respective wireless transceivers in other nodes of the lighting network. The wireless communication may be provided by using a suitable short-range wireless communication technique known in the art that enables communication over ranges from a few meters up to a few hundred meters. Examples of suitable wireless communication techniques include Bluetooth, Bluetooth Low-Energy (LE), ZigBee, WLAN/Wi-Fi according to an IEEE 802.11 family of standards, etc. Further examples include infrared communications and other non-radio-based short-range communication techniques. The choice of the communication technique and network topology for a specific implementation of the lighting arrangement 100 may depend e.g. on the required communication range and/or requirements with respect to energy-efficiency of the communication means. As a concrete non-limiting example, the wireless communication may rely on a wireless mesh network model, for example on a mesh network according to the Bluetooth or Bluetooth LE Mesh networking protocol known in the art.

In case wired communication is applied between nodes of the lighting network, the communication in this regard may be provided via a wired bus using a predefined lighting control protocol, such as the Digital Addressable Lighting Interface (DALI) specified in a series of technical standards IEC 62386, whereas the communication means may comprise a communication interface arranged to provide communication according to the applicable lighting control protocol.

Regardless of the manner of providing the communicative coupling between the nodes of the lighting network (e.g. wireless or wired communication), the communication between the user device 130 and the luminaire 120-k applies wireless communication medium, e.g. Bluetooth, Bluetooth LE or other short-rage wireless communication technique described in the foregoing.

The lighting control server 103 may comprise an analysis means for processing sound vectors and a communication means that is able to communicate at least with the respective communication means in the lighting control gateway 102 (e.g. the second communication means therein). In this regard, the lighting control server 103 may comprise one or more memories and one or more processors, where the one or more memories comprise respective aspects of program code that is executable by the one or more processors to provide the lighting control server 103. The lighting control server 103 is to be construed as a logical entity that may be provided by one or more computer devices that may be arranged to provide a cloud computing service.

The lighting control sever 103 may be arranged to receive, from the lighting control gateway 102, the respective sound feature vectors originating from the plurality of sound sensors 141 and to store the received sound feature vectors, together with the associated timing information and the sound sensor ID, in a memory in the lighting control server 103 for subsequent sound analysis by the analysis means. Moreover, the outcome of the analysis may be applied to adjust operation of the control means in the lighting control gateway 102. Operation of the analysis means is described in further detail described via examples provided in the following. These aspects are described in further detail via respective examples provided in the following.

The lighting control gateway 102 and/or the lighting control server 103 have the knowledge of respective locations of the plurality of luminaires 120 and the sound sensors 141 in the space the lighting system 100, 100' serves to illuminate. Consequently, the lighting control means in the lighting control gateway 102 and/or the analysis means in the lighting control server 103 have the knowledge of relative positions of sound sensors 141-j with respect to positions of the luminaires 120-k (and vice versa). Consequently, both the lighting control at the lighting control gateway 102 and the sound analysis in the lighting control server 103 that rely on the sound feature vectors originating from the plurality of sound sensors 141 may be carried out at least in part in view of the respective positions of the luminaires 120-k and the sound sensors 141-k with respect to each other.

The space the lighting system 100, 100' serves to illuminate may comprise a plurality of desks that have substantially fixed locations with respect to locations of the luminaires 120-k. In this regard, as described in the foregoing, the space may comprise a workplace such as an office room, an open office space, a meeting room, a classroom, etc. whereas the plurality of desks serves as a non-limiting example with respect to arrangement of a plurality of substantially fixed working locations within the space. Each desk may be associated with one of the plurality of luminaires 120 (and, conversely, the respective one of the plurality of luminaires 120 may be associated with the respective desk), typically with a luminaire 120-k that serves to illuminate the respective desk and/or area in immediate vicinity of the respective desk. Moreover, each desk is provided with luminaire identification means that enables the user device 130 operated at the desk or in its immediate vicinity to establish the wireless communication with the luminaire 120-k associated therewith. The luminaire identification means provided for a given desk may be preprogrammed with the luminaire ID of the luminaire 120-k that is associated with the given desk.

A user positioned at or close to the given desk may use a device such as a laptop computer, a tablet computer, a mobile phone etc. as the user device 130 for establishing a wireless connection with the luminaire 120-k associated with the given desk using the luminaire ID obtained from the luminaire identification means provided for the given desk and for operating a lighting adjustment application executing in the user device 130 to provide feedback on environmental conditions in the space the lighting system 100, 100' serves to illuminate at the location of the given desk or in its vicinity to the luminaire 120-k associated with the given desk. The lighting adjustment application may further enable the user to adjust one or more aspects of the light output of the luminaire 120-k associated with the given desk, e.g. light intensity, color temperature and/or color applied for the light output of the luminaire 120-k associated with the given desk, thereby providing the user with a possibility of locally finetuning these characteristics of lighting.

Non-limiting examples of the user device 130 establishing the wireless connection with the luminaire 120-k associated with the given desk via usage of the luminaire ID obtained from the luminaire identification means provided for the given desk comprise the following:
- The user device 130 may comprise a laptop computer and the given desk may be provided with a docking station for connecting the laptop computer. In this regard, the luminaire identification means may comprise a dongle coupled to the docking station, where the dongle is encoded with the luminaire ID of the luminaire 120-k associated with the given desk. In an example, the dongle may comprise wireless communication means that is preprogrammed to establish wireless connection with the luminaire 120-k upon the user connecting the laptop computer thereto and executing the lighting adjustment application in the laptop computer, whereas in another example the lighting adjustment application executing in the laptop computer may obtain the luminaire ID from the dongle and apply the wireless communication means in the laptop computer to establish the wireless connection with the luminaire 120-k.
- The luminaire identification means may comprise a NFC tag provided at the given desk, where the NFC tag has the luminaire ID of the luminaire 120-k associated with the given desk encoded therein. In this example, the user device 130 may comprise a mobile phone, a tablet computer, a laptop computer, etc. provided with a NFC reader and the lighting adjustment application executing therein may be arranged to read the luminaire ID from the NFC tag and to apply the wireless communication means in the user device 130 to establish the wireless connection with the luminaire 120-k.

The aspect of the user providing feedback on the environmental conditions at or close to the location of the given desk within the space the lighting system 100, 100' serves to illuminate via operating the lighting adjustment application executing in the user device 130 may comprise providing the user with a possibility of indicating respective ratings concerning one or more environmental characteristics at or close to the location of the given desk via a user interface (Ul) of the user device 130, which serve as respective user ratings concerning environmental characteristics at the location of the luminaire 120-k associated with the given desk. The environmental characteristics under consideration include at least a noise level (e.g. a sound level) at the user's location and they may further include one or more of the following: light level at the user's location, ambient temperature at the user's location, air quality at the user's location, etc. Figure 4 provides an illustrative and non-limiting example of Ul elements that may be applied to enter user rating(s) (or opinion(s)) concerning the environmental characteristics described in the foregoing.

In the illustration of Figure 4 shows three 'sliders' that may be positioned by the user in the range from "Low" to "High" at a position that represents the user's current rating of the respective aspect of the environmental characteristics at the user's location within the space. In particular, in this example the 'slider' on top represents the noise level (or the sound level) in the space, the 'slider' in the middle represents the light level in the space and the 'slider' at the bottom represents ambient temperature in the space, while in this example the user has indicated noise level that slightly exceeds the neutral noise level, light level that is neutral and ambient temperature that is slightly below neutral. The 'sliders' of Figure 4 serve as a non-limiting example of Ul means for entering the user rating of the environmental characteristics of the space. In other examples, the user input concerning respective ratings on the environmental characteristics under consideration may be provided via usage of Ul elements of other type, such as respective sets of push buttons or tick boxes that enable choosing the most appropriate one of predefined ratings for each of the environmental characteristics under consideration or as a respective text box that enables entering a numerical value that is descriptive of the rating concerning respective one of the environmental characteristics under consideration.

The lighting adjustment application may be arranged to request rating concerning the environmental characteristics in the space from the user of the user device 130, when it is located at or close to the given desk, according to a predefined schedule, e.g. at predefined time intervals and/or the lighting adjustment application may enable the user to provide respective ratings concerning the environmental characteristics in the space at the user's own initiative. Typically, the latter option is invoked by the user of the user device 130 when one or more of the environmental characteristics under consideration are non-optimal, e.g. when the noise level in the user's location is perceived as too high or too low.

Once the user has provided a respective rating concerning at least one of the environmental characteristics under consideration and/or changed an earlier rating concerning at least one of the environmental characteristics under consideration via the UI of the user device 130, the lighting adjustment application may provide respective indications of the user ratings concerning each of the environmental characteristics under consideration to the luminaire 120-k associated with the given desk via the wireless connection therebetween. Without losing generality, data element conveying these indications of the user ratings may be referred to as a user input vector and, consequently, a respective user input vector may be transmitted from the user device 130 to the luminaire 120-k each time new user input is received via the UI of the user device 130. In this regard, prior to transferring the user input vector to the luminaire 120-k, the lighting adjustment application may be arranged to convert each user-provided rating included therein into a numerical value in a respective predefined range. An example of such a range is from -10 to 10, where -10 represents user rating indicating maximally (too) low value of the respective environmental characteristic (e.g. too silent environment), 0 represents user rating indicating an optimal value of the respective environmental characteristic (e.g. suitable noise level) and 10 represents user rating indicating maximally (too) high value of the respective environmental characteristic (e.g. too loud environment).

The user input vector may be transferred from the user device 130 to the luminaire 120-k together with timing information that indicates the time of recording the respective user ratings at the user device 130, e.g. with a respective timestamp that indicates the time with respect to a predefined reference time. The user input vector may be further accompanied by a device ID assigned to the user device 130 (an address, a serial number, a name, etc.) and/or a user ID assigned to the (current) user of the user device (e.g. a name, a username, an email address, a telephone number, etc.). The user input vector may further include or be accompanied by an indication of the manner (or mode) of acquiring the user ratings in the user input vector, where the mode may define one of receiving the user ratings via a scheduled request for user ratings or via user providing the ratings at the user's own initiative.

Upon receiving the user input vector from the user device 130, the luminaire 120-k may be arranged to transmit the user input vector together with other information received therewith to the lighting control gateway 102, accompanied by the luminaire ID assigned to the luminaire 120-k. Hence, in this regard the information transmitted from the luminaire 120-k to the lighting control gateway 102 comprises the user input vector, the timing information pertaining to the user input vector (if available) and the luminaire ID of the luminaire 120-k, while this information may further include the device ID of the user device 130 and/or user ID received with the user input vector from the user device 130. Upon receiving the user input vector from the luminaire 120-k, the lighting control gateway 102 may store the user input vector, the associated timing information (if available) and the luminaire ID (possibly together with the device ID of the user device 130 and/or user ID) in a memory therein for subsequent processing at the lighting control gateway 102 and/or transmit these pieces of information to the lighting control server 103 for storage and analysis therein. The lighting control means in the lighting control gateway 102 may complement the received user input vectors with timing information (e.g. respective timestamps) that indicates the time of their reception at the lighting control gateway 102.

As described in the foregoing, the lighting control gateway 102 receives respective sound feature vectors originating from the plurality of sound sensors 141 and respective user input vectors originating from respective user devices 130 obtained via one or more of the plurality of luminaires 120. Hence, the lighting control server 103 obtains a respective time series of sound feature vectors from each of the sound sensors 141-j and a respective time series of user input vectors from one or more of the luminaires 120-k and, consequently, the lighting control gateway 102 has an up-to-date knowledge of sound characteristics in various locations within the space the lighting system 100, 100' serves to illuminate. This information may be considered to constitute (or provide basis for deriving) a sound map that enables the lighting control means in the lighting control gateway 102 to carry out a sound monitoring procedure that involves monitoring respective sound levels in one or more locations or areas of the space and adjusting one or more characteristics in operation of the lighting system 100, 100' in dependence of the sound level(s) within the space in view of at least one sound level threshold that may be derived by the lighting control server 103 (as described in the following). As a non-limiting example in this regard, the adjustment may comprise changing at least one characteristic of the light output of one or more of the luminaires 120-k of the lighting system 100, 100'.

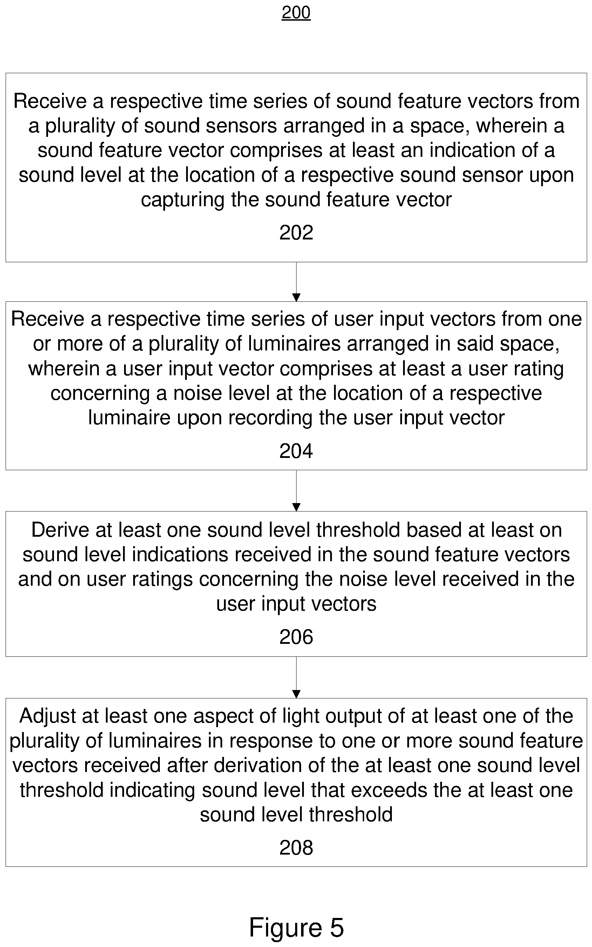

As an example in this regard, the sound monitoring procedure may be provided according to a method 200 that is illustrated by the flowchart depicted in Figure 5. The method 200 may be carried out in the course of operation of the lighting system 100, 100' and it may be carried out repeatedly according to a predefined schedule, e.g. at predefined time intervals. Although described herein as a method carried out jointly by the lighting control gateway 102 and the lighting control server 103, in general the method 200 may be carried out by a lighting control network or a lighting control entity comprising the lighting control gateway 102 and/or the lighting control server 103. As (further) examples in this regard, respective operations pertaining to each of the blocks 202 to 208 may be carried out by the lighting control gateway 102 or by the lighting control server 103, or the respective operations pertaining to the blocks 202 to 208 may be distributed between the lighting control gateway 102 and the lighting control server 103 in a manner that is different from the one explicitly described or implied herein. The respective operations described with references to blocks 202 to 208 pertaining to the method 200 may be implemented, varied and/or complemented in a number of ways, for example as described in the foregoing and/or in the following with references to structure and operation of the lighting system 100, 100'.

The method 200 proceeds from receiving the respective time series of sound feature vectors from the plurality of the sound sensors 141, as indicated in block 202. As described in the foregoing, each sound feature vector includes at least an indication of the sound level at the location of the respective sound sensor 141-j at the time of capturing the respective sound feature vector and it may include one or more further sound parameters pertaining to the time of capturing the respective sound feature vector. The method 200 further comprises receiving the respective time series of user input vectors from one or more of the plurality of luminaires 120-k, as indicated in block 204. As described in the foregoing, each user input vector comprises at least the user rating concerning the noise level at the location of the respective luminaire 120-k at the time of recording the user input vector and it may comprise respective user ratings concerning one or more further environmental characteristics at the location of the respective luminaire 120-k at the time of recording the user input vector.

The method 200 further comprises deriving at least one sound level threshold based at least on sound level indications received in the sound feature vectors and on user ratings concerning the noise level received in the user input vectors, as indicated in block 206. In this regard, derivation of the at least one sound level threshold may comprise deriving, re-deriving or adjusting the at least one sound level threshold via operation of the lighting control sever 103, as described in further detail in examples provided in the following. The method 200 further comprises adjusting at least one aspect of light output of at least one of the plurality of luminaires 120 in response to one or more sound feature vectors received after derivation of the at least one sound level threshold indicating sound level that exceeds the at least one sound level threshold, as indicated in block 208.

Referring back to operations pertaining to block 206, the at least one sound level threshold may comprise, for example, a single sound level threshold that is applicable throughout the space the lighting system 100, 100' serves to illuminate, one or more sound level thresholds that are applicable in respective predefined portions of the space, one or more sound level thresholds that are applicable during respective time periods, e.g. at respective times of the day, a time-varying sound level threshold that is varied in accordance with an environmental characteristics observed in the space. The manner of deriving the at least one sound level threshold depends on characteristics of sound level threshold(s) involved and examples in this regard is described in further detail via examples provided in the following.

As described in the foregoing, the lighting control server 103 receives, via the lighting control gateway 102, respective sound feature vectors originating from the plurality of sound sensors 141 and respective user input vectors originating from respective user devices 130 obtained via one or more of the plurality of luminaires 120. Moreover, the sound feature vectors are received together with respective timing information and with the sound sensor ID having captured the sounds serving as basis for the respective sound feature vector and the user input vectors are received together with the respective timing information and with the luminaire ID of the luminaire 120-k having forwarded the user input vector from the user device 130 via the lighting control gateway 102 to the lighting control sever 103. Consequently, with the knowledge of the respective locations of the plurality of sound sensors 141 and the plurality of luminaires 120 the lighting control server 103 obtains, over time, a respective time series of sound feature vectors from each of the sound sensors 141-j that represents a history of sound characteristics in various locations within the space and a respective time series of user input vectors from (or via) one or more of the plurality of luminaires 120-k that represents a history of user ratings concerning one or more environmental characteristics in various locations within the space.

Hence, referring back to operations pertaining to block 206 of the method 200, the analysis means in the lighting control server 103 may be arranged to derive the at least one sound level threshold based on the sound feature vectors and the user input vectors available at the lighting control server 103. Derivation of the at least one sound level threshold may comprise deriving, re-deriving or adjusting the sound level threshold based on at least some of the sound feature vectors and the user input vectors that are available at the lighting control server 103. As an example in this regard, derivation, re-derivation or adjustment of the at least one sound level threshold may be carried out based at least on sound level indications received in the sound feature vectors and on user ratings concerning the noise level received in the user input vectors. Once the analysis means in the lighting control server 103 has determined the at least one sound level threshold, this information may be transmitted to (the lighting control means in) the lighting control gateway 102 for use in the sound monitoring procedure applied therein, e.g. the one according to the method 200 described in the foregoing.

Concerning the derivation of the at least one sound level threshold, the analysis means in the lighting control server 103 is J Z arranged to carry out a sound analysis based on the respective sound feature vectors received from the plurality of sound sensors 141 in view of the user ratings included in the respective user input vectors received via the plurality of luminaires 120 in order to derive or re-derive the sound level threshold that is indicative of sound level considered disturbing by (past and current) occupants of the space. The sound analysis considers J Z sound feature vectors and user input vectors captured or derived within an analysis period, wherein the analysis period may cover, for example, a time period of predefined duration that (immediately) precedes the sound analysis. In this regard, the sound analysis may be carried out, for example, according to a predefined schedule (e.g. at predefined time intervals) or substantially continuously, e.g. such that the sound analysis to re-derive the sound level threshold is carried out in response to receiving at least a predefined amount of new user input vectors (since the most recent previous sound analysis), e.g. in response to receiving at least the predefined amount of new user input vectors captured after the analysis period applied in the most recent previous sound analysis. As a non-limiting example, the analysis period may have a duration in a range from a week to a few months, e.g. one month.

Z r The J Z derivation or re-derivation of the sound level threshold may include the following steps:
1. Determine a relationship between user ratings concerning noise levels indicated in user input vectors obtained for the analysis period and sound levels indicated in sound feature vectors obtained for the analysis period;
2. Derive or rederive the at least one sound level threshold based on the determined relationship.

As an example in this regard, the determination of step 1 above may comprise deriving one or more mapping functions that each define a relationship between the sound level indicated for the location of a given sound sensor 141-j and the user ratings concerning the noise level at the location of a given luminaire 120-k for respective one or more plurality of pairs of the given sound sensor 141-j and the given luminaire 120-k, whereas the derivation of step 2 above my comprise making use of the one or more mapping functions to (re)derive the at least one sound level threshold in view of a desired standard or 'grade' of user ratings for the noise level. The determination of step 1 above may comprise applying a numerical analysis method known in the art (such as regression analysis) to determine the relationship between user ratings concerning the noise level in the space and an observed noise level in the space e.g. via the one or more mapping functions or otherwise.

The approach outlined by the steps 1 and 2 above may be applied to derive a single sound level threshold that is applicable throughout the space the lighting system 100, 100' serves to illuminate via carrying out the sound analysis that considers all user input vectors obtained and all sound feature vectors obtained for the analysis period. In this regard, however, one or more aspects of the step 1 above may be varied in a number of ways, e.g. according to non-limiting examples described in the following:
- The determination of step 1 above may be limited to consider user input vectors obtained via a predefined subset of the plurality of luminaires 120, e.g. from luminaires located in a predefined portion of the space the lighting system 100, 100' serves to illuminate, thereby only accounting for user ratings originating from the respective portion of the space, e.g. one that is designated as an area for silent working.
- The determination of step 1 above may be limited to consider user input vectors received within one or more predefined sub-periods of the analysis period, e.g. ones received at a predefined time of the day and/or day of the week, such as during office hours, during non-office hours, during nighttime, during weekends, etc., thereby only accounting for user ratings obtained during the time periods of interest. Alternatively or additionally, such time-restricted determination may be applied for (separately) deriving a respective sound level threshold for application during subsequent occurrences of corresponding time periods.
- The determination of step 1 above may be limited to consider sound feature vectors that are received from a predefined subset of the plurality of sound sensors 141, e.g. from sound sensors located in a predefined portion of the space the lighting system 100, 100' serves to illuminate, thereby emphasizing sounds originating from the respective portion of the space, e.g. one that is designated as an area for silent working.

In a further example of deriving the single sound level threshold that is applicable throughout the space, the determination of step 1 above may further consider one or more sound parameters other than the sound level (e.g. the pitch and/or the STI), e.g. such that the determination of the relationship between the user rating concerning the noise level and the sound level is determined further in dependence of the one or more sound characteristics other than the sound level. Consequently, the derivation of step 2 above may comprise, for example, deriving a time-varying sound level threshold that is dependent on the respective sound characteristics (e.g. the pitch and/or STI) and subsequently setting or adjusting the sound level threshold in dependence of the respective sound characteristics indicated in the sound feature vectors received after the analysis period (e.g. in the course of operation of the method 200).

Along similar lines, in another further example of deriving the single sound level threshold that is applicable throughout the space, the determination of step 1 above may consider respective user ratings concerning respective one or more environmental characteristics other than the noise level (e.g. those concerning the light level and/or the ambient temperature), e.g. such that the determination of the relationship between the user rating concerning the noise level and the sound level is determined further in dependence of the respective user ratings concerning one or more environmental characteristics other than the noise level. Consequently, the derivation of step 2 above may comprise, for example, deriving a time-varying sound level threshold that is dependent on the respective user ratings concerning the one or more environmental characteristics (e.g. the light level and/or the temperature in the space) and subsequently setting or adjusting the sound level threshold in dependence of the respective user ratings concerning said one or more environmental characteristics indicated in the user input vectors received after the analysis period (e.g. in the course of operation of the method 200).

In another further example, the determination of step 1 above may be carried out in consideration of the indication of the manner (or mode) of acquiring the user ratings in the user input vector in the user device 130 that may be received in or together with the user input vectors. As an example in this regard, the determination of step 1 above may emphasize selected ones of user ratings entered in response to a scheduled request for user ratings at the user device 130 or user ratings obtained at the user device 130 at user's own initiative, thereby allowing e.g. giving a higher emphasis or weight on user ratings entered at the user's own initiative.

In a further example, the approach outlined by the steps 1 and 2 above may be applied to derive two or more sound level thresholds that are applicable in respective portions of the space the lighting system 100, 100' serves to illuminate. This may be provided, for example, via carrying out the sound analysis separately for the two or more portions of the space according to the examples described in the foregoing for derivation of the single sound level threshold for general applicability throughout the space, *mutatis mutandis,* thereby deriving the respective sound level threshold applicable for each of the two or more portions of the space.

According to a second exemplifying approach concerning derivation of the at least sound level threshold (not part of the claimed invention), J Z the analysis means in the lighting control server 103 may be arranged to carry out an adjustment procedure to adjust the at least one sound level threshold, for example, according to a predefined schedule (e.g. at predefined time intervals) or substantially continuously, e.g. such that the adjustment procedure to re-derive the sound level threshold is carried out in response to receiving at least a predefined amount of new user input vectors (since the most recent previous adjustment procedure), e.g. in response to receiving at least the predefined amount of new user input vectors captured after the analysis period applied in the most recent adjustment procedure. Alternatively or additionally, the adjustment procedure may be limited to operate only within one or more predefined time periods with respect to the time of the day and/or day of the week, such as during office hours, during non-office hours, during nighttime, during weekends, etc.

The second exemplifying approach concerning derivation of the at least one sound level threshold proceeds from the assumption that the adjustment procedure serves to adjust an existing sound level threshold, which may comprise a predefined default sound level threshold, a sound level threshold derived according to the first exemplifying approach concerning derivation of the at least one sound level threshold described in the foregoing or a sound level threshold previously adjusted via earlier operation of the adjustment procedure. The second exemplifying approach concerning derivation of the at least one sound level threshold is applicable for the scenario where the single sound level threshold is applicable throughout the space and for the scenario that involves two or more sound level thresholds that are applicable for respective portions of the space.

In the noise level (re)derivation according to the second exemplifying approach, the adjustment procedure may comprise adjusting the at least one sound level threshold in dependence of one or more user ratings included in the received user input vectors under consideration. An example in this regard comprises decreasing the respective sound level threshold as a response to the user ratings concerning the noise level in the user input vector under consideration indicating too high noise level and increasing the respective sound level threshold as a response to the user ratings concerning the noise level in the user input vectors under consideration indicating too high noise level. In case the user input vectors under consideration indicate neutral user rating concerning the noise level, the sound level threshold may remain unmodified. According to an example, the amount of change applied to the respective sound level threshold may be a predefined one, where in another example the amount of change may be dependent on the user ratings concerning the noise level in the user input vectors under consideration, e.g. such that change in the value of the sound level threshold increases with increasing difference between the user rating and a neutral rating.

The adjustment procedure described above may be varied in a number of ways, for example according to the non-limiting examples outlined in the following:
- The adjustment procedure may require reception of respective user input vector including a similar kind of user rating concerning the noise level (i.e. one indicating too high noise level or one indicting too low noise level) from at least a predefined number of luminaires 120-k within a time window of predefined duration before adjusting the sound level threshold accordingly. Alternatively or additionally, the adjustment procedure may require respective user input vector including a similar kind of user rating concerning the noise level from at least a predefined percentage of the plurality of luminaires 120-k within the time window of predefined duration before adjusting the sound level threshold accordingly. Such a limitation in the adjustment procedure may serve to avoid a single user or a small group of users that have preferences different from a majority of users in the space from 'dictating' the adjustment of the sound level threshold according to their preferences.
- The adjustment procedure may require a time interval of predefined duration between successive adjustments of the sound level threshold based on input vectors received from the same one of the plurality of luminaires 120. Such a limitation in the adjustment procedure may serve to avoid a single user from 'dictating' the adjustment of the sound level threshold according to their preferences and/or avoiding oscillating adjustment of the sound level threshold.
- The adjustment procedure may be limited to consider user input vectors obtained via a predefined subset of the plurality of luminaires 120, e.g. from luminaires located in a predefined portion of the space the lighting system 100, 100' serves to illuminate, thereby only accounting for user ratings originating from the respective portion of the space, e.g. one that is designated as an area for silent working.
- The adjustment procedure may be limited to consider sound feature vectors that are received from a predefined subset of the plurality of sound sensors 141, e.g. from sound sensors located in a predefined portion of the space the lighting system 100, 100' serves to illuminate, thereby emphasizing sounds originating from the respective portion of the space, e.g. one that is designated as an area for silent working.

Referring back to operations pertaining to block 208, according to an example, adjusting at least one aspect of light output of at least one of the plurality of luminaires 120 may comprise determining whether the one or more sound feature vectors under consideration indicate sound level that exceeds the at least one sound level threshold and adjusting at least one aspect of light output of one or more of the luminaires 120-k in response to said determination being affirmative (and, conversely, refraining from any adjustment of the light output in response to said determination being non-affirmative). In this regard, the determination of excessive sound level may comprise computing one or more representative sound levels based at least on the sound levels indicated in the sound feature vectors under consideration and determining whether the one or more representative sound levels exceed respective ones of the at least one sound level threshold. The one or more sound feature vectors considered in this determination may be respective sound feature vectors received from one or more sound sensors 141 within a time window of predefined duration.

In this regard, in case the at least one sound level threshold comprises a single sound level threshold that is applicable throughout the space, a single representative sound level may be computed and the computation may consider respective sound levels indicated in sound feature vectors from each of the plurality of sound sensors 141. Consequently, the determination of excessive sound level may comprise determining whether the single representative sound level exceeds the single sound level threshold.

In case the at least one sound level threshold comprises two or more sound level thresholds that are applicable for respective portions of the space, a respective representative sound level may be computed for each of the portions via consideration of respective sound feature vectors received from those sound sensors 141-j that are located within the respective portion of the space. Consequently, the determination of excessive sound level may comprise separately determining whether the respective representative sound level exceeds the sound level threshold applicable for the respective portion of the space. As a non-limiting example, the determination may be affirmative in response to at least a predefined number (e.g. one) of the representative sound levels exceeding the respective one of the sound level thresholds.

The computation of the representative sound level may comprise computing an average, a median, a maximum, etc. of the sound levels indicted in the sound feature vectors under consideration in computation of the respective representative sound level. The computation may further consider one or more other sound characteristics included in the sound feature vectors under consideration (e.g. the pitch and/or the STI) e.g. by adjusting the representative sound level accordingly before comparison to the respective one of the sound level thresholds.

The adjustment of at least one aspect of light output of at least one of the plurality of luminaires 120 in response to the sound-level-threshold-exceeding sound level serves as a 'signal' or 'alarm' to the occupants of the space with respect to an excessive sound level in the space. The adjustment may comprise adjusting one or more aspects of the respective light output of one or more of the plurality luminaires 120, e.g. one or more of the following aspects: light intensity, color temperature, color of light. According to an example, the adjustment may concern all luminaires 120-k of the lighting system 100, 100', whereas in another example the adjustment may concern only those ones of the plurality of luminaires 120 that are within a certain portion of the space, e.g. within a portions of the space for which the sound feature vectors received at the lighting control gateway 102 indicate the highest sound level within the space.

The adjustment of the respective light output of one or more of the plurality of luminaires 120 may be carried out using a predefined pattern, curve or profile, e.g. such that one or more of the light intensity, color temperature and color of light are changed according to a respective pattern over time. In this regard, the time scale covered by the pattern is relatively short, e.g. one in a range from a few tenths of a second to a few seconds, thereby enabling provision of the 'signal' or 'alarm' concerning a threshold-exceeding sound-level-threshold-exceeding sound level e.g. via 'blinking' the lights one or more times.

According to an example, the light output of the luminaires 120-k may be controlled locally via operation of the lighting control devices 110-k therein (e.g. in the lighting system 100) and the adjustment of the at least one aspect of the respective light output of at least one of the plurality of luminaires 120 (according to block 208) may comprise the lighting control means in the lighting control gateway 102 sending a request over the lighting network for the control means in the lighting control devices 110-k of the luminaires 120-k involved, which may locally implement the adjustment of their light output accordingly. In another example, the light output of the luminaires 120-k may be centrally controlled by the lighting control means in the lighting control gateway 102 (e.g. in the lighting system 100') and the adjustment of the at least one aspect of the light output of at least one of the plurality of luminaires 120 (according to block 208) may comprise the lighting control means in the lighting control gateway 102 directly controlling the respective light output of the luminaires 120-k involved accordingly.

According to an example, the derivation of the at least one sound level threshold (cf. block 206) may involve derivation of the at least one sound level threshold that pertains to a single sound level type indicated in the sound feature vectors and, consequently, the adjustment of the light output of one or more luminaires 120-k of the lighting system 100 accordingly (cf. block 208) may be carried out in consideration of the at least one sound level threshold so derived, e.g. such that the adjustment is carried out in response to sound feature vectors received at the lighting control gateway 102 indicating sound level of said type exceeding the at least one sound level threshold derived therefor. In this regard, the sound level under consideration may be e.g. one of the A-weighted sound level, C-weighted sound level or the Z-weighted sound level.

In another example, the derivation of the at least one sound level threshold (cf. block 206) may involve derivation of a respective at least one sound level threshold for two or more sound levels of different type indicated in the sound feature vectors, e.g. two or more of the A-weighted sound level, C-weighted sound level or the Z-weighted sound level. Consequently, the adjustment of the light output of one or more luminaires 120-k of the lighting system 100 accordingly (cf. block 208) may consider the respective sound level threshold(s) derived for the two or more sound level types, e.g. such that the adjustment is carried out in response to sound feature vectors received at the lighting control gateway 102 indicating any of the sound level types exceeding the respective at least one sound level threshold derived therefor or in response to sound feature vectors received at the lighting control gateway 102 indicating at least a predefined number of the sound level types exceeding the respective at least one sound level threshold derived therefor.

The lighting adjustment application executing in the user device 130 may be arranged to enable the user to provide further feedback on the environmental conditions as a reaction to observing the 'signal' or 'alarm' conveyed via short-term adjustment in the light output of at least one of the plurality of luminaires 120 in response to detecting sound-level-threshold-exceeding sound level at the lighting control gateway 102. While the user may provide such further feedback by providing the user ratings using the lighting adjustment application in the user device 130 at the user's own initiative, in an example the luminaire 120-k may send a command or indication to the user device 130 coupled thereto to cause the lighting adjustment application in the user device 130 to request to provide updated or revised ratings concerning the environmental characteristics in the space.

According to an example, in case the lighting control server 103 has access to sensor data pertaining to one or more environmental characteristics in the space the lighting system 100, 100' serves to illuminate (in addition to the information received in the sound feature vectors), the sound analysis carried out in the lighting control server 103 may also look for dependencies between the user ratings included in the user input vectors and one or more environmental conditions in the space. Examples of such environmental characteristics include the ones described in the foregoing in context of the sensor units, i.e. occupancy, light level in the space, carbon dioxide level, humidity, ambient temperature, air pressure, etc. Hence, in case the sound analysis identifies a dependency between the user rating concerning the noise level and an environmental characteristic of the space, the lighting control gateway 102 may operate to adjust the respective environmental characteristic accordingly instead of or in addition to adjusting at least one aspect of light output of at least one of the plurality of luminaires (in accordance with block 208) in order to improve user comfort.

As an example on making use of a dependency between the user rating concerning the noise level and an environmental condition in the space, if the sound analysis suggests that the user rating concerning the noise level (typically) increases with increasing light level at or close to the user's location in the space even though the observed sound level in the space remains substantially unchanged, the lighting control gateway 102 may operate the lighting system 100, 100' to increase the light level at or close to the user's location in the space in an attempt to improve user comfort. In another example, the sound analysis may suggest that the user rating concerning the noise level (typically) is higher when the ambient temperature at or close to the user's location in the space is within a certain temperature range even though the observed sound level in the space remains substantially unchanged, the lighting control gateway 102 may communicate with a HVAC system operated in the space in an attempt to adjust the ambient temperature at or close to the user's location in the space into the certain temperature range in an attempt to improve user comfort.

## Claims

1. A method (200) in a lighting system (100, 100') comprising a plurality of luminaires (120) arranged for illuminating a space and a plurality of sound sensors (141) arranged for capturing sound in respective locations within said space, the method (200) comprising:
receiving (202) a respective time series of sound feature vectors from said plurality of sound sensors (141), wherein a sound feature vector comprises at least an indication of a sound level at the location of a respective sound sensor (141-k) upon capturing the sound feature vector;
receiving (204) a respective time series of user input vectors from one or more of the plurality of luminaires (120), wherein a user input vector comprises at least a user rating concerning a noise level at the location of a respective luminaire (120-k) upon recording the user input vector;
deriving (206) at least one sound level threshold via carrying out a sound analysis based at least on the sound level indications received in the sound feature vectors and on user ratings concerning the noise level received in the user input vectors captured or derived within an analysis period of predefined duration that precedes the sound analysis; and
adjusting (208) at least one aspect of light output of at least one of the plurality of luminaires (120) in response to one or more sound feature vectors received after derivation of the at least one sound level threshold and indicating a sound level that exceeds the at least one sound level threshold.

2. A method (200) according to claim 1, wherein
deriving (206) the at least one sound level threshold comprises deriving a single sound level threshold that is applicable throughout said space, and
adjusting (208) the at least one aspect of light output of the at least one of the plurality of
luminaires (120) comprises deriving a single representative sound level based on respective sound levels indicated in the sound feature vectors received from said plurality of sound sensors (141) and adjusting (208) the at least one aspect of light output of the at least one of the plurality of luminaires (120) in response to the single representative sound level exceeding the single sound level threshold.

3. A method (200) according to claim 1, wherein
deriving (206) the at least one sound level threshold comprises deriving a respective sound level threshold for two or more portions of said space, and
adjusting (208) the at least one aspect of light output of the at least one of the plurality of luminaires (120) comprises deriving a respective representative sound level based on respective sound levels indicated in the sound feature vectors received from the sound sensors (141) located within a respective portion of said space and adjusting (208) the at least one aspect of light output of at least one of the plurality of luminaires (120) in response to at least a predefined number of representative sound levels exceeding the respective one of the sound level thresholds.

4. A method (200) according to claim 2 or 3, wherein the representative sound level includes
one of the following:
an average of the sound levels indicated in sound feature vectors involved in derivation of the respective representative sound level,
a median of the sound levels indicated in sound feature vectors involved in derivation of the respective representative sound level,
a maximum of the sound levels indicated in sound feature vectors involved in derivation of the respective representative sound level.

5. A method (200) according to any of claims 1 to 4, wherein deriving (206) the at least one sound level threshold comprises at least one of the following:
deriving the at least one sound level threshold based on the user input vectors receivec from those ones of the plurality of luminaires (120) that are located within a first predefined portion of said space,
deriving the at least one sound level threshold based on the sound feature vectors receivec from those ones of the plurality of sound sensors (141) that are located within a second predefined portion of said space,
deriving the at least one sound level threshold based on user input vectors received during predefined time periods.

6. A method (200) according to any of claims 1 to 5, wherein deriving (206) the at least one sound level threshold comprises deriving a respective sound level threshold for two or more time periods for application during subsequent occurrences of corresponding time periods.

7. A method (200) according to claim 5 or 6, wherein said time periods define a respective time of the day and/or a respective day of the week.

8. A method (200) according to any of claims 1 to 7, wherein said user input vectors comprise respective user ratings concerning one or more further environmental characteristics at the location of the respective luminaire (120-k), and deriving (206) the at least one sound level threshold comprises deriving the at least one sound level threshold further in dependence of said ratings concerning one or more further environmental characteristics as a time-varying sound level threshold for subsequent adjustment in dependence of respective ratings concerning one or more further environmental characteristics received in subsequent user input vectors.

9. A method (200) according to any of claims 1 to 8, wherein
said sound feature vectors comprise one or more further sound parameters that are descriptive of respective sound characteristics at the location of a respective sound sensor (141-k) upon capturing the sound feature vector, and
deriving (206) the at least one sound level threshold comprises deriving the at least one sound level threshold further in dependence of said one or more further sound parameters as a time-varying sound level threshold for subsequent adjustment in dependence of respective one or more further sound parameters received in subsequent user input vectors.

10. A method (200) according to any of claims 1 to 9, wherein said sound analysis comprises:
determining a relationship between the user ratings concerning the noise level in the user input vectors obtained for the analysis period and the sound levels indicated in the sound feature vectors obtained for the analysis period; and
deriving the at least one sound level threshold based on the determined relationship.

11. A method (200) according to any of claims 1 to 9, wherein determining (206) the at least one sound level threshold comprises carrying out a threshold adjustment procedure comprising:
decreasing the at least one sound level threshold in response to receiving at least a first predefined number of user ratings concerning the noise level that indicate a too high noise level; and
increasing the at least one sound level threshold in response to receiving at least a second predefined number of user ratings concerning the noise level that indicate a too low noise level.

12. A method (200) according to any of claims 1 to 11, wherein adjusting (208) the at least one
aspect of light output of the at least one of the plurality of luminaires (120) comprises
adjusting at least one of the following aspects: light intensity, color temperature, color of light.

13. A method (200) according to any of claims 1 to 12, wherein adjusting (208) the at least one
aspect of light output of the at least one of the plurality of luminaires (120) comprises
adjusting the at least one aspect according a predefined pattern over time.

14. A method (200) according to any of claims 1 to 13, wherein adjusting (208) the at least one
aspect of light output of the at least one of the plurality of luminaires (120) comprises one
of the following:
adjusting the at least one aspect of light output of each of the plurality of luminaires (120),
adjusting the at least one aspect of light output of those ones of the plurality of luminaires (120) that are located within a portion of said space for which the received sound feature vectors indicate the highest sound level within said space.

15. A method (200) according to any of claims 1 to 14, wherein the user rating concerning the noise level at the location of the respective luminaire (120-k) is obtained based on user input received via a user interface of a user device (130) locally connected to the respective luminaire (120).

16. A lighting control entity (102, 103) for controlling one or more aspects of light output of a lighting system (100, 100') comprising a plurality of luminaires (120) arranged for illuminating a space and a plurality of sound sensors (141) arranged for capturing sound in respective locations within said space, the lighting control entity (102, 103) arranged to:
receive a respective time series of sound feature vectors from said plurality of sound sensors (141), wherein a sound feature vector comprises at least an indication of a sound level at the location of a respective sound sensor (141-k) upon capturing the sound feature vector;
receive a respective time series of user input vectors from one or more of the plurality of luminaires (120), wherein a user input vector comprises at least a user rating concerning a noise level at the location of a respective luminaire (120-k) upon recording the user input vector;
derive at least one sound level threshold via carrying out a sound analysis based at least on the sound level indications received in the sound feature vectors and on user ratings concerning the noise level received in the user input vectors captured or derived within an analysis period of predefined duration that precedes the sound analysis; and
adjust at least one aspect of light output of at least one of the plurality of luminaires (120) in response to one or more sound feature vectors received after derivation of the at least one sound level threshold and indicating a sound level that exceeds the at least one sound level threshold.

17. A lighting system (100, 100') comprising a plurality of luminaires (120) arranged for illuminating a space, a plurality of sound sensors (141) arranged for capturing sound in respective locations within said space, and a lighting control entity (102, 103) according to claim 16.

## Patentansprüche

1. Verfahren (200) in einem Beleuchtungssystem (100, 100'), umfassend eine Vielzahl von Leuchten (120), eingerichtet zum Beleuchten eines Raums, und eine Vielzahl von Schallsensoren (141), eingerichtet zum Aufnehmen von Schall an jeweiligen Orten innerhalb des Raums, wobei das Verfahren (200) Folgendes umfasst:
Empfangen (202) einer jeweiligen Zeitreihe von Schallmerkmalsvektoren von der Vielzahl von Schallsensoren (141), wobei ein Schallmerkmalsvektor mindestens eine Angabe eines Schallpegels an dem Ort eines jeweiligen Schallsensors (141-k) beim Aufnehmen des Schallmerkmalsvektors umfasst;
Empfangen (204) einer jeweiligen Zeitreihe von Benutzereingabevektoren von einer oder mehreren aus der Vielzahl von Leuchten (120), wobei ein Benutzereingabevektor mindestens eine Benutzerbewertung im Hinblick auf einen Geräuschpegel an dem Ort einer jeweiligen Leuchte (120-k) beim Aufzeichnen des Benutzereingabevektors umfasst;
Ableiten (206) von mindestens einer Schallpegelschwelle über Ausführen einer Schallanalyse auf der Grundlage der Schallpegelangaben, die in den Schallmerkmalsvektoren empfangen wurden, und von Benutzerbewertungen im Hinblick auf den Geräuschpegel, die in den Benutzereingabevektoren empfangen wurden, aufgenommen oder abgeleitet innerhalb einer Analyseperiode von vordefinierter Dauer, die der Schallanalyse vorausgeht; und
Anpassen (208) mindestens eines Aspekts einer Lichtausgabe von mindestens einer aus der Vielzahl von Leuchten (120) als Reaktion auf einen oder mehrere Schallmerkmalsvektoren, die nach der Ableitung der mindestens einen Schallpegelschwelle empfangen wurden und einen Schallpegel angeben, der die mindestens eine Schallpegelschwelle übersteigt.

2. Verfahren (200) nach Anspruch 1, wobei
Ableiten (206) der mindestens einen Schallpegelschwelle Ableiten einer einzigen Schallpegelschwelle, die über den Raum hinweg anwendbar ist, umfasst und
Anpassen (208) des mindestens einen Aspekts von Lichtausgabe der mindestens einen aus der Vielzahl von Leuchten (120) Ableiten eines einzigen repräsentativen Schallpegels auf der Grundlage von jeweiligen Schallpegeln, die in den Schallmerkmalsvektoren, die von der Vielzahl von Schallsensoren (141) empfangen wurden, angegeben werden, und Anpassen (208) des mindestens einen Aspekts von Lichtausgabe der mindestens einen aus der Vielzahl von Leuchten (120), als Reaktion darauf, dass der einzige repräsentative Schallpegel die einzige Schallpegelschwelle übersteigt, umfasst.

3. Verfahren (200) nach Anspruch 1, wobei
Ableiten (206) der mindestens einen Schallpegelschwelle Ableiten einer jeweiligen Schallpegelschwelle für zwei oder mehr Anteile des Raums umfasst, und
Anpassen (208) des mindestens einen Aspekts von Lichtausgabe der mindestens einen aus der Vielzahl von Leuchten (120) Ableiten eines jeweiligen repräsentativen Schallpegels auf der Grundlage von jeweiligen Schallpegeln, die in den Schallmerkmalsvektoren, die von den Schallsensoren (141), die sich innerhalb eines jeweiligen Anteils des Raums befinden, empfangen wurden, angegeben werden, und Anpassen (208) des mindestens einen Aspekts von Lichtausgabe der mindestens einen aus der Vielzahl von Leuchten (120), als Reaktion darauf, dass mindestens eine vordefinierte Anzahl von repräsentativen Schallpegeln die jeweilige eine der Schallpegelschwellen übersteigt, umfasst.

4. Verfahren (200) nach Anspruch 2 oder 3, wobei der repräsentative Schallpegel einen der Folgenden beinhaltet:
einen Durchschnittswert der Schallpegel, die in Schallmerkmalsvektoren, die bei der Ableitung des jeweiligen repräsentativen Schallpegels involviert sind, angegeben werden,
einen Medianwert der Schallpegel, die in Schallmerkmalsvektoren, die bei der Ableitung des jeweiligen repräsentativen Schallpegels involviert sind, angegeben werden,
einen Maximalwert der Schallpegel, die in Schallmerkmalsvektoren, die bei der Ableitung des jeweiligen repräsentativen Schallpegels involviert sind, angegeben werden.

5. Verfahren (200) nach einem der Ansprüche 1 bis 4, wobei Ableiten (206) der mindestens einen Schallpegelschwelle mindestens eines der Folgenden umfasst:
Ableiten der mindestens einen Schallpegelschwelle auf der Grundlage der Benutzereingabevektoren, empfangen von jenen aus der Vielzahl von Leuchten (120), die sich innerhalb eines ersten vordefinierten Anteils des Raums befinden,
Ableiten der mindestens einen Schallpegelschwelle auf der Grundlage der Schallmerkmalsvektoren, empfangen von jenen aus der Vielzahl von Schallsensoren (141), die sich innerhalb eines zweiten vordefinierten Anteils des Raums befinden,
Ableiten der mindestens einen Schallpegelschwelle auf der Grundlage von Benutzereingabevektoren, die während vordefinierter Zeitperioden empfangen wurden.

6. Verfahren (200) nach einem der Ansprüche 1 bis 5, wobei Ableiten (206) der mindestens einen Schallpegelschwelle Ableiten einer jeweiligen Schallpegelschwelle für zwei oder mehr Zeitperioden zur Anwendung während aufeinanderfolgender Auftretensfälle von entsprechenden Zeitperioden umfasst.

7. Verfahren (200) nach Anspruch 5 oder 6, wobei die Zeitperioden eine jeweilige Tageszeit und/oder einen jeweiligen Wochentag definieren.

8. Verfahren (200) nach einem der Ansprüche 1 bis 7, wobei
die Benutzereingabevektoren jeweilige Benutzerbewertungen im Hinblick auf ein oder mehrere weitere Umweltcharakteristika an dem Ort der jeweiligen Leuchte (120-k) umfassen, und wobei
Ableiten (206) der mindestens einen Schallpegelschwelle Ableiten der mindestens einen Schallpegelschwelle ferner in Abhängigkeit von den Bewertungen im Hinblick auf eine oder mehrere weitere Umweltcharakteristika als eine zeitvariable Schallpegelschwelle für nachfolgende Anpassung in Abhängigkeit von jeweiligen Bewertungen im Hinblick auf eine oder mehrere weitere Umweltcharakteristika, empfangen in nachfolgenden Benutzereingabevektoren, umfasst.

9. Verfahren (200) nach einem der Ansprüche 1 bis 8, wobei
die Schallmerkmalsvektoren einen oder mehrere weitere Schallparameter umfassen, die jeweilige Schallcharakteristika an dem Ort eines jeweiligen Schallsensors (141-k) beim Aufnehmen des Schallmerkmalsvektors beschreiben, und
Ableiten (206) der mindestens einen Schallpegelschwelle Ableiten der mindestens einen Schallpegelschwelle ferner in Abhängigkeit von dem einen oder den mehreren weiteren Schallparametern als eine zeitvariable Schallpegelschwelle für nachfolgende Anpassung in Abhängigkeit von dem jeweiligen einen oder den mehreren weiteren Schallparametern, empfangen in nachfolgenden Benutzereingabevektoren, umfasst.

10. Verfahren (200) nach einem der Ansprüche 1 bis 9, wobei die Schallanalyse Folgendes umfasst:
Bestimmen einer Beziehung zwischen den Benutzerbewertungen im Hinblick auf den Geräuschpegel in den Benutzereingabevektoren, erhalten für die Analyseperiode, und den Schallpegeln, die in den Schallmerkmalsvektoren, erhalten für die Analyseperiode, angegeben sind; und
Ableiten der mindestens einen Schallpegelschwelle auf der Grundlage der bestimmten Beziehung.

11. Verfahren (200) nach einem der Ansprüche 1 bis 9, wobei Bestimmen (206) der mindestens einen Schallpegelschwelle Ausführen einer Schwellenanpassungsprozedur umfasst, umfassend:
Absenken der mindestens einen Schallpegelschwelle als Reaktion auf Empfangen von mindestens einer ersten vordefinierten Anzahl von Benutzerbewertungen im Hinblick auf den Geräuschpegel, die einen zu hohen Geräuschpegel angeben; und
Anheben der mindestens einen Schallpegelschwelle als Reaktion auf Empfangen von mindestens einer zweiten vordefinierten Anzahl von Benutzerbewertungen im Hinblick auf den Geräuschpegel, die einen zu niedrigen Geräuschpegel angeben.

12. Verfahren (200) nach einem der Ansprüche 1 bis 11, wobei Anpassen (208) des mindestens einen Aspekts von Lichtausgabe der mindestens einen aus der Vielzahl von Leuchten (120) Anpassen von mindestens einem der folgenden Aspekte umfasst: Lichtintensität, Farbtemperatur, Lichtfarbe.

13. Verfahren (200) nach einem der Ansprüche 1 bis 12, wobei Anpassen (208) des mindestens einen Aspekts von Lichtausgabe der mindestens einen aus der Vielzahl von Leuchten (120) Anpassen des mindestens einen Aspekts gemäß einem vordefinierten Muster mit der Zeit umfasst.

14. Verfahren (200) nach einem der Ansprüche 1 bis 13, wobei Anpassen (208) des einen mindestens einen Aspekts von Lichtausgabe der mindestens einen aus der Vielzahl von Leuchten (120) eines der Folgenden umfasst:
Anpassen des mindestens einen Aspekts von Lichtausgabe von jeder aus der Vielzahl von Leuchten (120),
Anpassen des mindestens einen Aspekts von Lichtausgabe von jenen aus der Vielzahl von Leuchten (120), die sich innerhalb eines Anteils des Raums befinden, für den die empfangenen Schallmerkmalsvektoren den höchsten Schallpegel innerhalb des Raums angeben.

15. Verfahren (200) nach einem der Ansprüche 1 bis 14, wobei die Benutzerbewertung im Hinblick auf den Geräuschpegel an dem Ort der jeweiligen Leuchte (120-k) auf der Grundlage von Benutzereingaben erhalten wird, die über eine Benutzerschnittstelle einer Bildaufnahmevorrichtung (130), die lokal mit der jeweiligen Leuchte (120) verbunden ist, empfangen werden.

16. Beleuchtungssteuerungsentität (102, 103) zum Steuern eines oder mehrerer Aspekte von Lichtausgabe eines Beleuchtungssystems (100, 100'), umfassend eine Vielzahl von Leuchten (120), eingerichtet zum Beleuchten eines Raums, und eine Vielzahl von Schallsensoren (141), eingerichtet zum Aufnehmen von Schall an jeweiligen Orten innerhalb des Raums, wobei die Beleuchtungssteuerungsentität (102, 103) eingerichtet ist zum:
Empfangen einer jeweiligen Zeitreihe von Schallmerkmalsvektoren von der Vielzahl von Schallsensoren (141), wobei ein Schallmerkmalsvektor mindestens eine Angabe eines Schallpegels an dem Ort eines jeweiligen Schallsensors (141-k) beim Aufnehmen des Schallmerkmalsvektors umfasst;
Empfangen einer jeweiligen Zeitreihe von Benutzereingabevektoren von einer oder mehreren aus der Vielzahl von Leuchten (120), wobei ein Benutzereingabevektor mindestens eine Benutzerbewertung im Hinblick auf einen Geräuschpegel an dem Ort einer jeweiligen Leuchte (120-k) beim Aufzeichnen des Benutzereingabevektors umfasst;
Ableiten von mindestens einer Schallpegelschwelle über Ausführen einer Schallanalyse auf der Grundlage der Schallpegelangaben, die in den Schallmerkmalsvektoren empfangen wurden, und von Benutzerbewertungen im Hinblick auf den Geräuschpegel, die in den Benutzereingabevektoren empfangen wurden, aufgenommen oder abgeleitet innerhalb einer Analyseperiode von vordefinierter Dauer, die der Schallanalyse vorausgeht; und
Anpassen mindestens eines Aspekts einer Lichtausgabe von mindestens einer aus der Vielzahl von Leuchten (120) als Reaktion auf einen oder mehrere Schallmerkmalsvektoren, die nach der Ableitung der mindestens einen Schallpegelschwelle empfangen wurden, und einen Schallpegel angeben, der die mindestens eine Schallpegelschwelle übersteigt.

17. Beleuchtungssystem (100, 100'), umfassend eine Vielzahl von Leuchten (120), eingerichtet zum Beleuchten eines Raums, eine Vielzahl von Schallsensoren (141), eingerichtet zum Aufnehmen von Schall an jeweiligen Orten innerhalb des Raums, und eine Beleuchtungssteuerungsentität (102, 103) nach Anspruch 16.

## Revendications

1. Procédé (200) dans un système d'éclairage (100, 100') comprenant une pluralité de luminaires (120) agencés pour éclairer un espace et une pluralité de capteurs de son (141) agencés pour capturer le son en des localisations respectives à l'intérieur dudit espace, le procédé (200) comprenant :
la réception (202) d'une série temporelle respective de vecteurs de caractéristique de son en provenance de ladite pluralité de capteurs de son (141), dans lequel un vecteur de caractéristique de son comprend au moins une indication d'un niveau de son au niveau de la localisation d'un capteur de son respectif (141-k) lors de la capture du vecteur de caractéristique de son ;
la réception (204) d'une série temporelle respective de vecteurs d'entrée d'utilisateur en provenance d'un ou de plusieurs luminaires de la pluralité de luminaires (120), dans lequel un vecteur d'entrée d'utilisateur comprend au moins une valeur nominale d'utilisateur concernant un niveau de bruit au niveau de la localisation d'un luminaire respectif (120-k) lors de l'enregistrement du vecteur d'entrée d'utilisateur ;
la dérivation (206) d'au moins un seuil de niveau de son via la mise en oeuvre d'une analyse de son sur la base au moins des indications de niveau de son qui sont reçues dans les vecteurs de caractéristique de son et de valeurs nominales d'utilisateur concernant le niveau de bruit qui sont reçues dans les vecteurs d'entrée d'utilisateur qui sont capturés ou dérivés à l'intérieur d'une période d'analyse d'une durée prédéfinie qui précède l'analyse de son ; et
le réglage (208) d'au moins un aspect de sortie de lumière d'au moins l'un de la pluralité de luminaires (120) en réponse à un ou plusieurs vecteurs de caractéristique de son qui sont reçus après la dérivation de l'au moins un seuil de niveau de son et qui indiquent un niveau de son qui excède l'au moins un seuil de niveau de son.

2. Procédé (200) selon la revendication 1, dans lequel
la dérivation (206) de l'au moins un seuil de niveau de son comprend la dérivation d'un unique seuil de niveau de son qui peut être appliqué sur l'ensemble dudit espace, et
le réglage (208) de l'au moins un aspect de sortie de lumière de l'au moins un luminaire de la pluralité de luminaires (120) comprend la dérivation d'un unique niveau de son représentatif sur la base de niveaux de son respectifs qui sont indiqués dans les vecteurs de caractéristique de son qui sont reçus depuis ladite pluralité de capteurs de son (141) et le réglage (208) de l'au moins un aspect de sortie de lumière de l'au moins un luminaire de la pluralité de luminaires (120) en réponse au fait que l'unique niveau de son représentatif excède l'unique seuil de niveau de son.

3. Procédé (200) selon la revendication 1, dans lequel
la dérivation (206) de l'au moins un seuil de niveau de son comprend la dérivation d'un seuil de niveau de son respectif pour deux parties ou plus dudit espace, et
le réglage (208) de l'au moins un aspect de sortie de lumière de l'au moins un luminaire de la pluralité de luminaires (120) comprend la dérivation d'un niveau de son représentatif respectif sur la base de niveaux de son respectifs qui sont indiqués dans les vecteurs de caractéristique de son qui sont reçus depuis les capteurs de son (141) qui sont localisés à l'intérieur d'une partie respective dudit espace et le réglage (208) de l'au moins un aspect de sortie de lumière d'au moins un luminaire de la pluralité de luminaires (120) en réponse au fait qu'au moins un nombre prédéfini de niveaux de son représentatifs excèdent l'un respectif des seuils de niveau de son.

4. Procédé (200) selon la revendication 2 ou 3, dans lequel le niveau de son représentatif inclut une valeur parmi les suivantes :
une moyenne des niveaux de son qui sont indiqués dans des vecteurs de caractéristique de son qui sont mis en jeu lors de la dérivation du niveau de son représentatif respectif ;
une médiane des niveaux de son qui sont indiqués dans des vecteurs de caractéristique de son qui sont mis en jeu lors de la dérivation du niveau de son représentatif respectif ;
un maximum des niveaux de son qui sont indiqués dans des vecteurs de caractéristique de son qui sont mis en jeu lors de la dérivation du niveau de son représentatif respectif.

5. Procédé (200) selon l'une quelconque des revendications 1 à 4, dans lequel la dérivation (206) de l'au moins un seuil de niveau de son comprend au moins une dérivation parmi les suivantes :
la dérivation de l'au moins un seuil de niveau de son sur la base des vecteurs d'entrée d'utilisateur qui sont reçus depuis ceux de la pluralité de luminaires (120) qui sont localisés à l'intérieur d'une première partie prédéfinie dudit espace ;
la dérivation de l'au moins un seuil de niveau de son sur la base des vecteurs de caractéristique de son qui sont reçus depuis ceux de la pluralité de capteurs de son (141) qui sont localisés à l'intérieur d'une seconde partie prédéfinie dudit espace ;
la dérivation de l'au moins un seuil de niveau de son sur la base de vecteurs d'entrée d'utilisateur qui sont reçus pendant des périodes temporelles prédéfinies.

6. Procédé (200) selon l'une quelconque des revendications 1 à 5, dans lequel la dérivation (206) de l'au moins un seuil de niveau de son comprend la dérivation d'un seuil de niveau de son respectif pour deux périodes temporelles ou plus dans le but de son application pendant des occurrences subséquentes de périodes temporelles correspondantes.

7. Procédé (200) selon la revendication 5 ou 6, dans lequel lesdites périodes temporelles définissent une heure respective de la journée et/ou un jour respectif de la semaine.

8. Procédé (200) selon l'une quelconque des revendications 1 à 7, dans lequel
lesdits vecteurs d'entrée d'utilisateur comprennent des valeurs nominales d'utilisateur respectives concernant une ou plusieurs autres caractéristiques environnementales au niveau de la localisation du luminaire respectif (120-k), et
la dérivation (206) de l'au moins un seuil de niveau de son comprend la dérivation de l'au moins un seuil de niveau de son en outre en fonction desdites valeurs nominales concernant une ou plusieurs autres caractéristiques environnementales en tant que seuil de niveau de son variant temporellement pour un réglage subséquent en fonction de valeurs nominales respectives concernant une ou plusieurs autres caractéristiques environnementales qui sont reçues dans des vecteurs d'entrée d'utilisateur subséquents.

9. Procédé (200) selon l'une quelconque des revendications 1 à 8, dans lequel
lesdits vecteurs de caractéristique de son comprennent un ou plusieurs autres paramètres de son qui décrivent des caractéristiques de son respectives au niveau de la localisation d'un capteur de son respectif (141-k) lors de la capture du vecteur de caractéristique de son, et
la dérivation (206) de l'au moins un seuil de niveau de son comprend la dérivation de l'au moins un seuil de niveau de son en outre en fonction desdits un ou plusieurs autres paramètres de son en tant que seuil de niveau de son variant temporellement pour un réglage subséquent en fonction d'un ou de plusieurs autres paramètres de son respectifs qui sont reçus dans des vecteurs d'entrée d'utilisateur subséquents.

10. Procédé (200) selon l'une quelconque des revendications 1 à 9, dans lequel ladite analyse de son comprend :
la détermination d'une relation entre les valeurs nominales d'utilisateur concernant le niveau de bruit dans les vecteurs d'entrée d'utilisateur qui sont obtenus pour la période d'analyse et les niveaux de son qui sont indiqués dans les vecteurs de caractéristique de son qui sont obtenus pour la période d'analyse ; et
la dérivation de l'au moins un seuil de niveau de son sur la base de la relation déterminée.

11. Procédé (200) selon l'une quelconque des revendications 1 à 9, dans lequel la détermination (206) de l'au moins un seuil de niveau de son comprend la mise en oeuvre d'une procédure de réglage de seuil comprenant :
la diminution de l'au moins un seuil de niveau de son en réponse à la réception d'au moins un premier nombre prédéfini de valeurs nominales d'utilisateur concernant le niveau de bruit qui indiquent un niveau de bruit trop élevé ; et
l'augmentation de l'au moins un seuil de niveau de son en réponse à la réception d'au moins un second nombre prédéfini de valeurs nominales d'utilisateur concernant le niveau de bruit qui indiquent un niveau de bruit trop faible.

12. Procédé (200) selon l'une quelconque des revendications 1 à 11, dans lequel le réglage (208) de l'au moins un aspect de sortie de lumière de l'au moins un luminaire de la pluralité de luminaires (120) comprend le réglage d'au moins l'un des aspects suivants : l'intensité lumineuse, la température de couleur, la couleur de la lumière.

13. Procédé (200) selon l'une quelconque des revendications 1 à 12, dans lequel le réglage (208) de l'au moins un aspect de sortie de lumière de l'au moins un luminaire de la pluralité de luminaires (120) comprend le réglage de l'au moins un aspect conformément à un motif prédéfini au fil du temps.

14. Procédé (200) selon l'une quelconque des revendications 1 à 13, dans lequel le réglage (208) de l'au moins un aspect de sortie de lumière de l'au moins un luminaire de la pluralité de luminaires (120) comprend un réglage parmi les suivants :
le réglage de l'au moins un aspect de sortie de lumière de chacun de la pluralité de luminaires (120),
le réglage de l'au moins un aspect de sortie de lumière de ceux de la pluralité de luminaires (120) qui sont localisés à l'intérieur d'une partie dudit espace pour laquelle les vecteurs de caractéristique de son reçus indiquent le niveau de son le plus élevé à l'intérieur dudit espace.

15. Procédé (200) selon l'une quelconque des revendications 1 à 14, dans lequel la valeur nominale d'utilisateur concernant le niveau de bruit au niveau de la localisation du luminaire respectif (120-k) est obtenue sur la base d'une entrée d'utilisateur qui est reçue via une interface utilisateur d'un dispositif utilisateur (130) qui est connecté localement sur le luminaire respectif (120).

16. Entité de commande d'éclairage (102, 103) pour commander un ou plusieurs aspects de sortie de lumière d'un système d'éclairage (100, 100') comprenant une pluralité de luminaires (120) agencés pour éclairer un espace et une pluralité de capteurs de son (141) agencés pour capturer le son en des localisations respectives à l'intérieur dudit espace, l'entité de commande d'éclairage (102, 103) étant agencée pour :
recevoir une série temporelle respective de vecteurs de caractéristique de son en provenance de ladite pluralité de capteurs de son (141), dans lequel un vecteur de caractéristique de son comprend au moins une indication d'un niveau de son au niveau de la localisation d'un capteur de son respectif (141-k) lors de la capture du vecteur de caractéristique de son ; pour
recevoir une série temporelle respective de vecteurs d'entrée d'utilisateur en provenance d'un ou de plusieurs luminaires de la pluralité de luminaires (120), dans lequel un vecteur d'entrée d'utilisateur comprend au moins une valeur nominale d'utilisateur concernant un niveau de bruit au niveau de la localisation d'un luminaire respectif (120-k) lors de l'enregistrement du vecteur d'entrée d'utilisateur ; pour
dériver au moins un seuil de niveau de son via la mise en oeuvre d'une analyse de son sur la base au moins des indications de niveau de son qui sont reçues dans les vecteurs de caractéristique de son et de valeurs nominales d'utilisateur concernant le niveau de bruit qui sont reçues dans les vecteurs d'entrée d'utilisateur qui sont capturés ou dérivés à l'intérieur d'une période d'analyse d'une durée prédéfinie qui précède l'analyse de son ; et pour
régler au moins un aspect de sortie de lumière d'au moins l'un de la pluralité de luminaires (120) en réponse à un ou plusieurs vecteurs de caractéristique de son qui sont reçus après la dérivation de l'au moins un seuil de niveau de son et qui indiquent un niveau de son qui excède l'au moins un seuil de niveau de son.

17. Système d'éclairage (100, 100') comprenant une pluralité de luminaires (120) agencés pour éclairer un espace, une pluralité de capteurs de son (141) agencés pour capturer le son en des localisations respectives à l'intérieur dudit espace et une entité de commande d'éclairage (102, 103) selon la revendication 16.
